# EUROPÄISCHE PATENTANMELDUNG

(11) **EP 3 923 451 A1**
(43) Veröffentlichungstag der Anmeldung: **15.12.2021**
(21) Anmeldenummer: 21170673.4
(22) Anmeldetag: 27.04.2021
(51) Int. Cl.: H02K 3/28, H02K 1/16

(54) **MULTI-ZAHNSPULENWICKLUNG FÜR EINE 3-STRÄNGIGE DREHFELDMASCHINE**

(30) Priorität: 10.06.2020 DE 102020115465
(71) Anmelder: ebm-papst Mulfingen GmbH & Co. KG, 74673 Mulfingen (DE)
(72) Erfinder: BAUN, Martin, 74673 Mulfingen (DE); HUTH, Gerhard, 97618 Hohenroth-Leutershausen (DE)
(74) Vertreter: Staeger & Sperling Partnerschaftsgesellschaft mbB

(57) **Zusammenfassung**

Die Erfindung betrifft eine Drehfeldmaschine mit einem 2p-poligen Ständer (10) ausgebildet mit einer Wicklungsanordnung in Zahnspulentechnik umfassend m Wicklungsstränge (U, V, W), wobei die Wicklungsanordnung aus wenigstens einer ersten, nämlich inneren Doppel-Zahnspule (20) und einer zweiten, nämlich äußeren Doppel-Zahnspule (30) besteht, die beide jeweils vier benachbarte Nuten (N) des Ständers (10) zu einem Teil mit einem Wicklungsstrang (W) belegen, wobei jede Doppel-Zahnspule (20, 30) ein Spulenpaar aus zwei konzentrisch angeordneten Spulen (Sa, Si) ausbildet und die zweite Doppel-Zahnspule (30) um eine Polteilung gegenüber der ersten Doppel-Zahnspule (20) versetzt angeordnet ist, dadurch gekennzeichnet, dass die Stromrichtung der jeweiligen versetzten Spulen im Wicklungsstrang (U, V, W) der ersten Doppel-Zahnspule (10) identisch ist zur Stromrichtung in diesem Wicklungsstrang in der Spule der zweiten Doppel-Zahnspule (20).

## Beschreibung

Die Erfindung betrifft eine Wicklungsanordnung für eine 3-strängige Drehfeldmaschine sowie eine 3-strängige Drehfeldmaschine mit einer solchen Wicklungsanordnung.

Umrichter gespeiste permanentmagneterregte Synchronmaschinen (PM Synchronmaschinen) kommen bei einer Vielzahl von technischen Anwendungen zum Einsatz. Aus Kostengründen werden PM Synchronmaschinen zunehmend mit so genannten Zahnspulenwicklungen ausgeführt. Die Zahnspulentechnik vereinfacht den Ständeraufbau einer PM-Synchronmaschine und ermöglicht zudem einen segmentierten Ständeraufbau, so dass der Ständer modulweise in einer Art Baukastenkonzept gefertigt werden kann. Nachteilig bei Zahnspulenwicklungen ist es, dass diese ein breites Luftspaltfeldspektrum ausbilden, das je nach Motordesign mehr oder weniger störend sein kann.

Im Stand der Technik sind zu Zahnspulenwicklungen bereits unterschiedliche Wicklungskonzepte bekannt. Die Druckschrift US 20120228981 A1 setzt sich die Reduzierung einer Subharmonischen in Bezug auf die Arbeitsfeldwelle zur Aufgabe und schlägt als Lösung eine Mehrschichtwicklung, bestehend aus mindestens zwei Spulenseiten pro Nut, vor, wobei die Leiterzahl der Spulenseiten in einer ersten Nut von der Leiterzahl der Spulenseiten in einer zweiten Nut verschieden ist, wobei die Spulen als Zahnspulen ausgeführt werden.

In der Druckschrift US 20120001512 A1 wir ein Stator mit einer doppelten Anzahl von Nuten gegenüber dem Stand der Technik vorgeschlagen. Die Spulen umschließen dabei jeweils zwei Zähne. Die Spulen sind gekennzeichnet durch unterschiedliche Windungszahlen bei gleicher Spulenweite.

Auch die Druckschrift US 20140035425 A1 beschäftigt sich mit der Reduzierung von unerwünschten Oberfeldern durch eine kostengünstig herstellbare Wicklung. Es wird eine Mehrschicht-Zahnspulenwicklung vorgeschlagen, wobei die einzelnen Spulen eines Stranges unterschiedliche Windungszahlen aufweisen und die Zähne eine unterschiedliche Anzahl von Zahnspulen tragen. Auch diese Wicklungstopologie ist für kleine Polzahlen nicht zielführend.

Die beiden Offenbarungen DE 20 2017 107387 U1 und DE 20 2017 107388 U1 beschreiben sogenannte Multi-Zahnspulen-Wicklungen der Strangzahl 2 und 3 bestehend aus mehreren konzentrisch ineinander verschachtelten Zahnspulen, die jedoch durch einen verhältnismäßig kleinen Wicklungsfaktor und durch zwei getrennte Wicklungsschichten, nämlich eine Unterschicht und eine Oberschicht, gekennzeichnet sind.

Im Produktsegment der kleineren Lüfter- und Pumpenantriebe kommen oft PM-Synchronmotoren zum Einsatz, bei denen die Blechpaketlänge l_{fe} deutlich kürzer ist als der Ständeraußendurchmesser D_{A}. Diese Motorausführungen werden auch als "Kurzmotoren" bezeichnet. Bei einer 4-poligen Wicklungsausführung befinden sich dann etwa 70 - 80 % des Wicklungskupfers inaktiv in den Wickelköpfen, was sich deutlich nachteilig auf die Aktivteilausnutzung und die Energieeffizienz eines solchen Motors auswirkt.

Kleine PM-Synchronmotoren, die feldorientiert am Umrichter betrieben werden und zunehmend im Bereich der Hochdrehzahlantriebe zum Einsatz kommen, lassen sich grundsätzlich in Zahnspulentechnik ausführen. Da Zahnspulenwicklungen aber Prinzip bedingt zu höheren Polzahlen neigen, lassen sich PM-Synchronmotoren mit niedriger Polzahl (4-polig) mit den bekannten Zahnspulenwicklungen nur sehr begrenzt realisieren.

Gesucht wird somit eine Drehfeldwicklung in der Ausprägung einer Zahnspulenwicklung mit kurzem Wickelkopf, die vorteilhaft bei Kurzmotoren zum Einsatz kommen kann, die eine niederpolige / 4-polige Ausführung ermöglicht und zudem ein günstiges Wicklungsfeldspektrum besitzt.

Es ist daher Aufgabe der vorliegenden Erfindung vorbesagte Nachteile zu überwinden und eine Wicklungstopologie in der Ausprägung einer Zahnspulenwicklung für eine 3-strängige Drehfeldmaschine, wie z. B. eine 3-strängige Motorausführung vorzuschlagen.

Diese Aufgabe wird durch die Merkmalskombination gemäß Anspruch 1 gelöst.

Ein Grundgedanke der vorliegenden Erfindung besteht darin, eine Zahnspulenwicklung mit einem spezifischen Wicklungsschema für insbesondere drei Wicklungsstränge vorzusehen. Das bestehende technische Problem kann durch eine 3-zonige Doppel-Zahnspulenwicklung (auch kurz als: 3Z-DOZA-Wicklung bezeichnet) gelöst werden. Das Grundelement und damit das Gleichteil dieser Wicklungsanordnung ist eine Doppel-Zahnspule, die 4 benachbarte Nuten des Ständers zur Hälfte belegt. Zur Hälfte belegen bedeutet, dass die 4 benachbarten Nuten entweder in der Oberschicht oder in der Unterschicht belegt sind.

In einer vorteilhaften Ausgestaltung der Erfindung ist dabei vorgesehen, dass die Doppelzahnspule aus zwei konzentrisch angeordneten Spulen besteht und zwar aus der inneren Spule sowie der konzentrisch um die innere Spule angeordnete äußere Spule.

Bevorzugt ist die Wicklung dabei folgendermaßen ausgeführt, so dass die Bestromung wie nachfolgend angegeben erfolgt, nämlich, dass die zwei Doppel-Zahnspulen identisch bestromt sind und dabei um zwei Polteilungen (2τ_{P}) zueinander versetzt angeordnet sind.

Die Doppel-Zahnspule besteht aus zwei konzentrisch angeordneten Spulen eines Wicklungsstrangs und zwar einer inneren Spule sowie einer äußeren Spule, die um die Zähne die für die innere Spule verwendet wurden, herum gewickelt ist.

Die beiden konzentrisch angeordneten aus einem Wicklungsstrang gewickelten Spulen bilden ein Spulenpaar aus. Im Bereich des Wickelkopfs verlaufen demnach die Windungen der äußeren Spule des Spulenpaars oberhalb der Windungen der inneren Spule dieses Spulenpaars.

Erfindungsgemäß wird eine Wicklungsanordnung für eine Drehfeldmaschine sowie eine Drehfeldmaschine mit einem 2p-poligen Ständer mit einer solchen Wicklungsanordnung vorgeschlagen, wobei p die Polpaarzahl und 2p die Polzahl bezeichnet. Diese Wicklungsanordnung wird aus der zuvor beschriebenen Doppel-Zahnspulenwicklung gebildet umfassend m Wicklungsstränge U, V, W, (m = 3 bei einer 3-strängigen Drehfeldmaschine) wobei jede Doppel-Zahnspule ein Spulenpaar aus den zwei konzentrisch angeordneten Spulen ausbildet und die zweite Doppel-Zahnspule um eine Polteilung gegenüber der ersten Doppel-Zahnspule versetzt angeordnet ist, wobei die Anordnung so je Strang gewickelt ist, dass die Stromrichtung der jeweiligen versetzten Spulen im entsprechenden Wicklungsstrang der ersten Doppel-Zahnspule identisch ist zur Stromrichtung in diesem Wicklungsstrang in der Spule der zweiten Doppel-Zahnspule.

Ferner sind die jeweiligen Doppelzahnspulen, die in der Unterschicht mit einem ersten Wicklungsstrang bewickelt sind in deren Oberschicht mit wenigstens einem zweiten davon abweichenden, vorzugsweise mit einem Spulenabschnitt eines zweiten und dritten davon abweichenden Strangs bewickelt.

Soll die Drehfeldwicklung höherpolig sein, so wird das Wicklungsschema entsprechend sukzessive fortgesetzt und bei dem Beispiel mit einer 8-poligen Wicklung somit also verdoppelt. Mit der 3Z-DOZA-Wicklung sind somit die Grundfeld-Polzahlen 2p = 4, 8, 12, usw. möglich.

Weiter ist mit Vorteil vorgesehen, dass die jeweiligen Spulen auf den Doppel-Zahnspulen in einer Unterschicht und Oberschicht jeweils in der sukzessiven gleichen Abfolge der Wicklungsstränge und der Stromrichtung angeordnet sind, was bedeutet, dass die Reihenfolge der Wicklungsstränge in Umlaufrichtung des Ständers in der Unterschicht und der Oberschicht jeweils gleich ist und gleichermaßen die Wicklung so ausgeführt ist, dass auch die Stromrichtung in den entsprechenden Spulen gleichläufig ist.

Die Anzahl der Windungen in einem Spulenstrang der inneren Spule eines Spulenpaars einer Doppel-Zahnspule wird bevorzugt geringer gewählt als die Anzahl der Windungen dieses Spulenstrangs in der äußeren Spule des Spulenpaars im Bereich dieser Doppel-Zahnspule.

Besonders vorteilhaft lässt sich die Erfindung bei permanenterregten Synchronmaschinen mit einem 2-oder 4-poligen Ständer, weiter vorzugsweise mit drei Wicklungssträngen realisieren.

Andere vorteilhafte Ausbildungen der Erfindung sind in den Unteransprüchen gekennzeichnet bzw. werden nachstehend zusammen mit der Beschreibung der bevorzugten Ausführung der Erfindung anhand der Figuren näher dargestellt.
- Fig. 1: einen Ausschnitt eines Zonenplans einer Doppel-Zahnspule,
- Fig. 2: einen Strang-Zonenplan einer 4-poligen 3Z-Doppel-Zahnspulenwicklung;
- Fig. 3: einen Zonenplan einer 4-poligen Doppel-Zahnspulenwicklung mit der Strangzahl m = 3,
- Fig. 4: einen Zonenplan einer 8-poligen Doppel-Zahnspulenwicklung mit der Strangzahl m = 3,
- Fig. 5: eine Nutbelegung einer Doppel-Zahnspule mit innerer und äußerer Spule mit jeweils unterschiedlichen Windungszahlen und
- Fig. 6: einen Zonenplan einer 4-poligen, 3 zonigen Doppel-Zahnspulenwicklung .

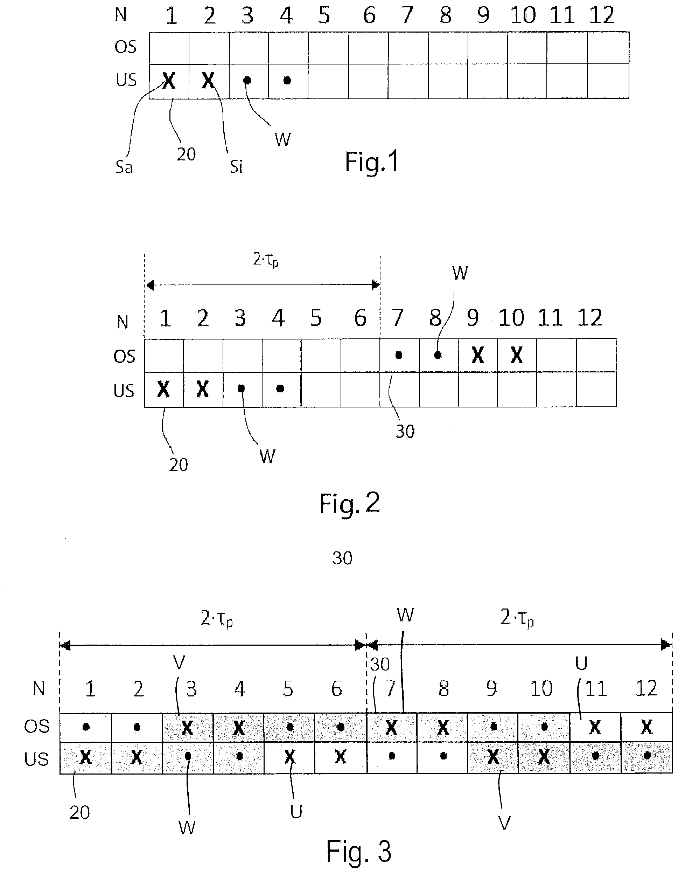

Die Erfindung wird im Folgenden mit Bezug auf die Figuren 1 bis 6 näher beschrieben, wobei gleiche Bezugszeichen auf gleiche strukturelle oder funktionale Merkmale hinweisen.

Die Fig. 1 zeigt die Doppelzahnspulenwicklung als Ausschnitt eines Zonenplans. Die Unterschicht US ist hier mit der inneren und äußeren Spule (Si, Sa) belegt. Ferner ist der Wickelsinn bzw. die augenblickliche Stromrichtung dargestellt, wobei die Stromrichtung bei den beiden Nuten 1 und 2 in Blatteintrittsrichtung und in den beiden Nuten 3 und 4 in Blattaustrittsrichtung erfolgt.

Ein 2-poliger Drehfeldständer mit einer solchen Doppel-Zahnspulenwicklung für die Wicklungsstrangzahl m = 3 umfasst demnach m x 4 = 3 x 4 = 12 Nuten, wie diese in den Zonenplänen der Figuren 2 bis 4 und 6 dargestellt sind.

Die Fig. 2 zeigt einen Strang-Zonenplan einer 4-poligen Doppel-Zahnspulenwicklung d. h. die Wicklung eines Wicklungsstrangs W in einer Unterschicht US und einer Oberschicht OS. Die zwei Doppel-Zahnspulen 20, 30 dieses Stranges W werden gemäß diesem Ausführungsbeispiel genau um eine Polteilung bei dem 2-poligen Fall, also um 6 Nutteilungen bzw. 2 Polteilungen (2τ_{P}) gegeneinander verschoben bzw. versetzt und werden genau identisch bestromt, was wiederum durch die symbolisch angedeutete Stromrichtung in Blatteintrittsrichtung bzw. Blattaustrittsrichtung ersichtlich ist. Die augenblickliche Stromrichtung ist insofern aus dem Zonenplan zu entnehmen.

Die Fig. 3 zeigt einen Zonenplan einer 4-poligen Doppel-Zahnspulenwicklung der Strangzahl m = 3 mit den drei Wicklungssträngen U, V, W. Die unterschiedlichen Wicklungsstränge sind durch die unterschiedlichen Grau-Schraffuren dargestellt. Jeder Wicklungsstrang U, V, W ist in zwei Doppel-Zahnspulen gewickelt, von denen jeweils eine in der Unterschicht US und eine in der Oberschicht OS liegt. Die zwei Doppel-Zahnspulen eines jeden Wicklungsstranges U, V, W werden gemäß diesem Ausführungsbeispiel genau um je zwei Polteilungen gegeneinander verschoben und diese werden jeweils genau in gleicher Stromrichtung bestromt bzw. haben eine entsprechende Wickelrichtung.

Anders ausgedrückt bedeutet dies, dass die Stromrichtung der beiden Spulen der ersten Doppel-Zahnspule im Bereich der 1. und 2. Nut des Wicklungsstrangs US mit der Stromrichtung der beiden erstem Spulen der zweiten Doppel-Zahnspule im Bereich der 7. und 8. Nut identisch ist und auch die Stromrichtung in den anderen Wicklungsabschnitten, somit im Bereich der 3. und 4. Nut der ersten Doppel-Zahnspule und im Bereich der 9. und 10. Nut der zweiten Doppel-Zahnspule ebenfalls identisch ist.

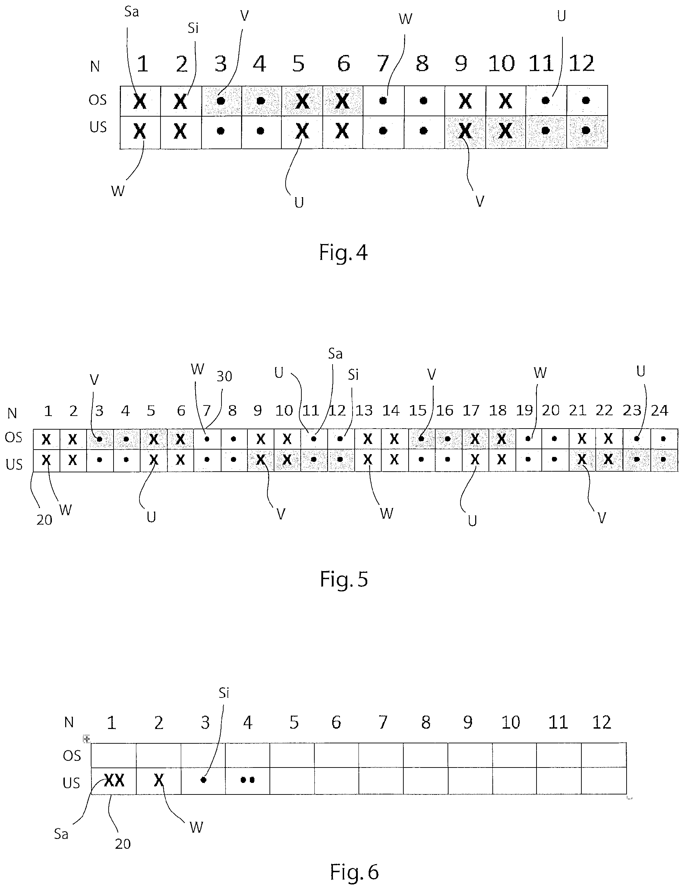

Die Fig. 4 zeigt einen Zonenplan eines Ausführungsbeispiels einer 8-poligen Doppel-Zahnspulenwicklung mit der Strangzahl m = 3 mit 24 Nuten. Die prinzipielle Anordnung und Abfolge der Spulenpaare der Doppelzahnspulen 20, 30 erfolgt wie zuvor beschrieben.

Die Reihenfolge der Wicklungsstränge U, V, W in Umlaufrichtung des Ständers in der Unterschicht US und der Oberschicht OS ist gleich, wobei auch hier die Stromrichtung in den entsprechenden Spulen Si, Sa gleichläufig vorgesehen ist.

In der Fig. 5 ist ein Ausführungsbeispiel mit einer Nutbelegung einer Doppel-Zahnspule 20 mit innerer und äußerer Spule Si, Sa mit jeweils unterschiedlichen Windungszahlen gezeigt, wobei die äußere Spule Sa der Doppel-Zahnspule 20 eine höhere Windungszahl aufweist gegenüber der inneren Spule Si.

Die 3-strängige Doppel-Zahnwicklung der Polzahl p erregt ein Luftspaltfeldspektrum mit den Ordnungszahlen v/p = 1 + 3 x g mit g = 0, ±1, ±2, ±3, ±4, ... und besitzt, wenn der Nutschlitz vernachlässigt wird, betragsmäßig genau 2 unterschiedliche Wicklungsfaktoren lξvl, die sich, wie in nachfolgender Tabelle 1 dargestellt, zyklisch wiederholen.

**Tabelle 1**

| v/p | \|ξv\| |
|---|---|
| ... | ... |
| 7 | 0,750 |
| 4 | 0,433 |
| 1 | 0,750 |
| -2 | 0,433 |
| -5 | 0,750 |
| ... | ... |

Damit besitzt die 3-zonige Doppel-Zahnspulenwicklung noch eine relativ hohe Grundfeldausnutzung. Die technische Wirkung der Nutharmonischen kann wirksam durch eine gegenseitige Schrägung oder Staffelung zwischen Ständer und Läufer unterdrückt werden.

Zur weiteren Optimierung des Luftspaltfeldspektrums können entsprechend Figur 4 die innere- und äußere Spule der Doppelspulen, die für die Drehfeldwicklung ein sich wiederholendes Gleichteil darstellt, mit unterschiedlichen Windungszahlen ausgeführt werden. Wᵢₙₙₑₙ ist dann die Windungszahl der inneren Spule und W_{außen} ist die Windungszahl der äußeren Spule. Das Beispiel in Figur 5 zeigt die Situation W_{außen} > Wᵢₙₙₑₙ.

Wird zum Beispiel eine Aufteilung der Windungszahlen von Wᵢₙₙₑₙ/W_{außen} = 2/3 gewählt, so kann die Grundfeldausnutzung um rund 7 % gesteigert werden. Die Leiterzahl pro Nut ist dabei stets konstant und unabhängig von der Aufteilung der Spulenwindungszahlen (siehe Tabelle 2).

**Tabelle 2**

| v/p | lξvl |
|---|---|
| ... | ... |
| 7 | 0,800 |
| 4 | 0,346 |
| 1 | 0,800 |
| -2 | 0,346 |
| -5 | 0,800 |
| ... | ... |

So lässt sich das Konzept der Erfindung und die beschriebene Wicklungssystematik der 3-zonigen Doppel-Zahnspulenwicklung (3Z-DOZA-Wicklung) nach Figur 2 mit einer Lochzahl von q = 2 grundsätzlich auf 3-zonige Multi-Zahnspulenwicklungen mit Lochzahlen q > 2 erweitern. Für den Fall q = 3 besteht der Wicklungsaufbau nach Fig. 6 aus Dreifach-Zahnspulen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht, so dass z. B. die Anzahl der Nuten, die Anzahl der Wicklungsstränge m und die Anzahl der Wicklungen auf den Anwendungsfall entsprechend angepasst sein kann.

## Patentansprüche

1. Drehfeldmaschine mit einem 2p-poligen Ständer (10) ausgebildet mit einer Wicklungsanordnung in Zahnspulentechnik umfassend m Wicklungsstränge (U, V, W), wobei die Wicklungsanordnung aus wenigstens einer ersten, nämlich inneren Doppel-Zahnspule (20) und einer zweiten, nämlich äußeren Doppel-Zahnspule (30) besteht, die beide jeweils vier benachbarte Nuten (N) des Ständers (10) zu einem Teil mit einem Wicklungsstrang (W) belegen, wobei jede Doppel-Zahnspule (20, 30) ein Spulenpaar aus zwei konzentrisch angeordneten Spulen (Sa, Si) ausbildet und die zweite Doppel-Zahnspule (30) um eine Polteilung gegenüber der ersten Doppel-Zahnspule (20) versetzt angeordnet ist, **dadurch gekennzeichnet, dass** die Stromrichtung der jeweiligen versetzten Spulen im Wicklungsstrang (U, V, W) der ersten Doppel-Zahnspule (10) identisch ist zur Stromrichtung in diesem Wicklungsstrang in der Spule der zweiten Doppel-Zahnspule (20).

2. Drehfeldmaschine gemäß Anspruch 1, **dadurch gekennzeichnet, dass** die jeweils vier benachbarten Nuten (N) des Ständers (10), die zu einem Teil mit einem Wicklungsstrang (U, V, W) bewickelt sind, entweder in der Oberschicht (OS) oder der Unterschicht (US) mit einer Doppelzahn-Spule (20, 30) belegt sind.

3. Drehfeldmaschine gemäß Anspruch 1 oder 2, **dadurch gekennzeichnet, dass** die äußere Doppelzahnspule (30) konzentrisch um die innere Doppelzahnspule (20) herum angeordnet ist.

4. Drehfeldmaschine gemäß einem dem vorhergehenden Ansprüche 1 bis 3, **dadurch gekennzeichnet, dass** die Reihenfolge der Wicklungsstränge (U, V, W) in Umlaufrichtung des Ständers (10) in der Unterschicht (US) und der Oberschicht (OS) gleich ist und gleichermaßen die Wicklung so vorgesehen ist, dass auch die Stromrichtung in den entsprechenden Spulen gleichläufig ist.

5. Drehfeldmaschine gemäß einem der vorhergehenden Ansprüche, **dadurch gekennzeichnet, dass** die Anzahl der Windungen in einem Spulenstrang (U, V, W) der inneren Spule (Si) eines Spulenpaars einer Doppel-Zahnspule (10, 20) geringer ist als die Anzahl der Windungen dieses Spulenstrangs (U, V, W) in der äußeren Spule (Sa) des Spulenpaars im Bereich dieser Doppel-Zahnspule (10, 20).

6. Drehfeldmaschine gemäß Anspruch 5, **dadurch gekennzeichnet, dass** das Verhältnis der Anzahl der Windungen der inneren Spule (Si) zur äußeren Spule (Sa) eines Spulenpaars vorzugsweise kleiner 0,8 ist, weiter vorzugsweise in einem Bereich zwischen 0,6 und 0,7 liegt, weiter bevorzugt 2/3 beträgt.

7. Drehfeldmaschine gemäß einem der vorhergehenden Ansprüche, **dadurch gekennzeichnet, dass** die Strangzahl der Wicklungsstränge 3 beträgt.
